# EUROPEAN PATENT APPLICATION

(11) **EP 2 309 121 A1**
(43) Date of publication of application: **13.04.2011**
(21) Application number: 09172053.2
(22) Date of filing: 02.10.2009
(51) Int. Cl.: F03D 5/06, F03D 9/00

(54) **Method and devices for obtaining electrical energy from the elements of building constructions**

(71) Applicant: Eurocomputer S.A., 00-762 Warszawa (PL)
(72) Inventor: Koradecki, Dariusz, 00-762 Warszawa (PL)
(74) Representative: Karcz, Katarzyna

(57) **Abstract**

The invention concerns a method of obtaining useful electric energy out of the elements of a construction, active element of a construction and the construction equipped with such element.

The method, the element and the construction according to the invention enable conversion of wind energy absorbed by the construction façade into electric energy, while the basic façade functions, ie. protection of the interior against the atmospheric factors and heat losses are being preserved. The inventive method is particularly efficient in dense development areas, predominated by unstable and variable winds, which are not favorable to common wind turbines.

## Description

The present invention concerns the domain of alternative ways of obtaining electric energy, in particular it relates to the elements of a construction which are specially adapted and used for this purpose. The object of the invention is to provide a method of obtaining electric energy out of the elements of a construction, active element of a construction and the construction equipped with such element.

The outer elements of a construction façade e.g. glazing, decoration or advertising panels are commonly mounted on an independent, pillar supporting structure. Apart from the esthetics, their basic function is to protect the building interior against atmospheric factors like rain, snow, wind as well as against the heat losses. The pillar supporting structure is fastened to the roofs, but it does not carry any loads beside the own weight of the façade and the wind pressure bearing against its surface. In typical solutions, static distribution of such strains on the supporting structure and hence on the ferroconcrete roofs has been assumed is.

Prior art alternative methods of obtaining electric energy out of modified outer elements of buildings structures are limited to solar energy conversion in photovoltaic cells or heat collectors. The inventor of the present invention has not found any solution based on conversion of the wind energy absorbed by modified outer elements of a construction structure. Moreover, considering that urban areas are frequently located out of sunlight favorable climate zones, the functional conversion of the wind energy absorbed by the construction façade is more promising, while parallel solar energy conversion is not excluded.

The method according to the invention enables converting the wind energy absorbed by the construction façade into the useful electric energy, while the basic façade functions, i.e. protection of the interior against the atmospheric factors and heat loss protection are being preserved. The method according to the invention is particularly efficient in dense building development areas, predominated by unstable and variable winds, which are not favorable to common wind turbines.

The kinetic energy of the an active movable outer façade element is accumulated by generating overpressure in a pneumatic or hydraulic system, or alternatively - in a model solution - in a spring drive mechanism engaged with the movable façade element.

The active element according to the invention may have a form of façade glazing panel or a decoration and/or advertising panel. Proper sealing and dilatation of such a movable panel in the façade structure may be ensured by applying resilient sealing glides between the rigid frame fastened to the façade structure and the movable element and additionally on the interior side an elastic rubber band.

An important advantage of the invention is the possibility of integration of the whole energy conversion system in the structure of a construction façade, while the total costs of its standard assembly is not significantly increased. In particular, the method according to the invention does not require construction of any specific structures, and in consequence it does not involve the inconveniences of obtaining special environment-connected permits, which constitutes another inconvenience limiting the use of the known wind turbines in urban areas

### Detailed description of the embodiments of the invention

Assuming that rigid, e.g. glass panels mounted on properly designed axial hinges are used , the majority of the wind energy absorbed by the façade surface is being converted into the kinetic energy of the movable panel. Consequently it may be recovered on the edge of the panel which is located opposite in relation to its axis and where the linear dislocations of the panel reach their maximum. The said maximum is limited only by the basic façade functions, i.e. the protection of the interior against the atmospheric factors and the heat losses. Hence, a relatively small amplitude of the panel movements is assumed, allowing for a waterproof and air-tight sliding connection between the panel edge and the internal side surfaces of the modular orthogonal frames fastened to the façade structure which includes all the necessary fastening means for the specific elements of the active elements like hinges and the accumulation system for accumulating the kinetic energy of the movements of said active element, being the movable panel.

The limitations of the curtain panel movements determine the selection of the damping parameters of the accumulation system and the electric energy production means coupled thereto, enabling its efficient functioning in specific, statistically determined local wind conditions. These conditions include e.g, the orthogonal to the façade component of the wind impact as well as its mean duration time. Too low damping would cause the panel to reach its extreme inclined position during the most of the wind impact time, which would inhibit the kinetic energy conversion due to the panel being immobilized by its bumper. On the other hand, too high damping would adversely affect the system efficiency by unnecessary limitation of the panel movements amplitude which would in turn cause energy dispersion in case of small impacts of the wing, below the converter threshold. Adequate selection of the accumulation system and the electric energy production means depend on local wind conditions. For the purpose of this model analysis orthogonal wind blows having the amplitude of 2m/s and the duration time of 4s have been assumed.

A panel 3 m x 2 m would absorb approx. 36 J of energy within the 2s 2m/s wind blow, which would result in a wind pressure amounting to 36N. Orthogonal force applied to the façade surface at the location near the lower edge of the panel and spaced by 3 m from the panel rotation axis, compensating the panel dislocation, would amount to 18N. On the other hand, a force of approx. 6N would enable the inclination of a movable panel weighting 100kg, within the 50mm amplitude limits. Consequently, the remaining 12N may be directly accumulated and converted by the accumulation system and the electric energy production means coupled to the lower edge of the active element according to the invention. Typically, the minimal voltage requirements for the conversion of kinetic energy into electric energy, enabling its further transmission and the cost-extensive accumulation, should reach 14V. A typical alternator requires min 500rpm for that purpose and because of unavoidable excitation losses, at least 5-10s work cycles. It excludes efficient direct conversion of the kinetic energy derived from any low velocity and low amplitude movements (assuming a 5cm/s linear movement) into electric energy. Use of a complex e.g. planetary transmission gearbox is expensive and does not solve the short work cycle problem unless additional inertial elements are introduced.

Consequently, the preferred accumulation system for the purpose of the present invention comprises pressure containers (air bags).

### Exemplary embodiment of the invention

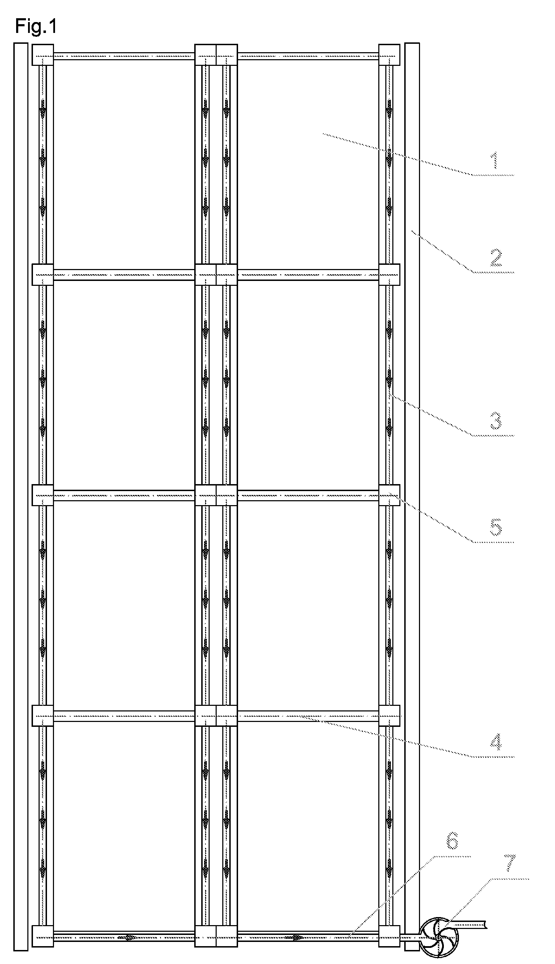

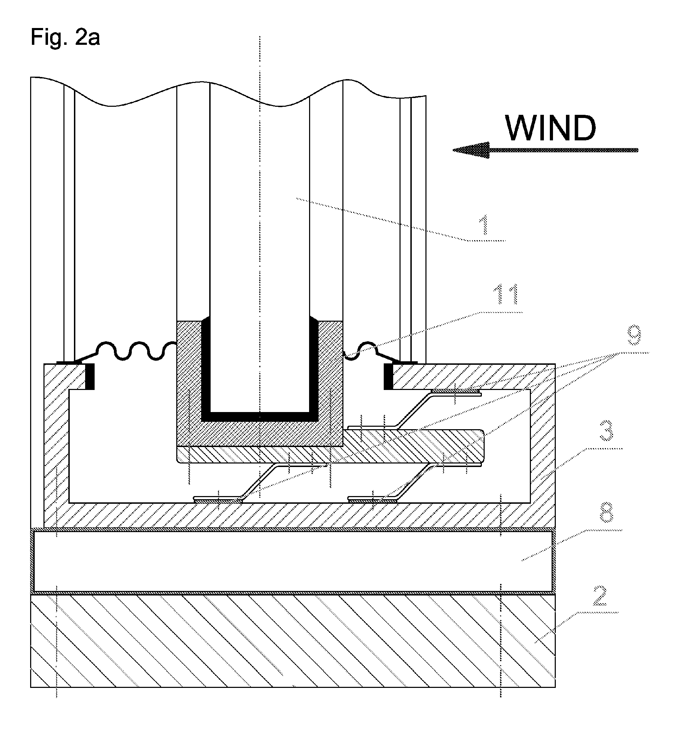

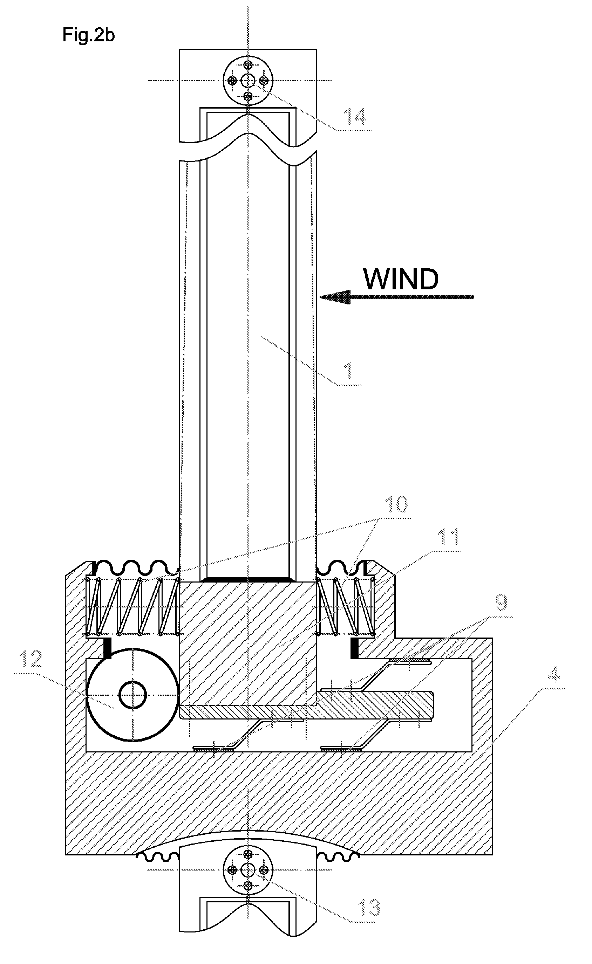

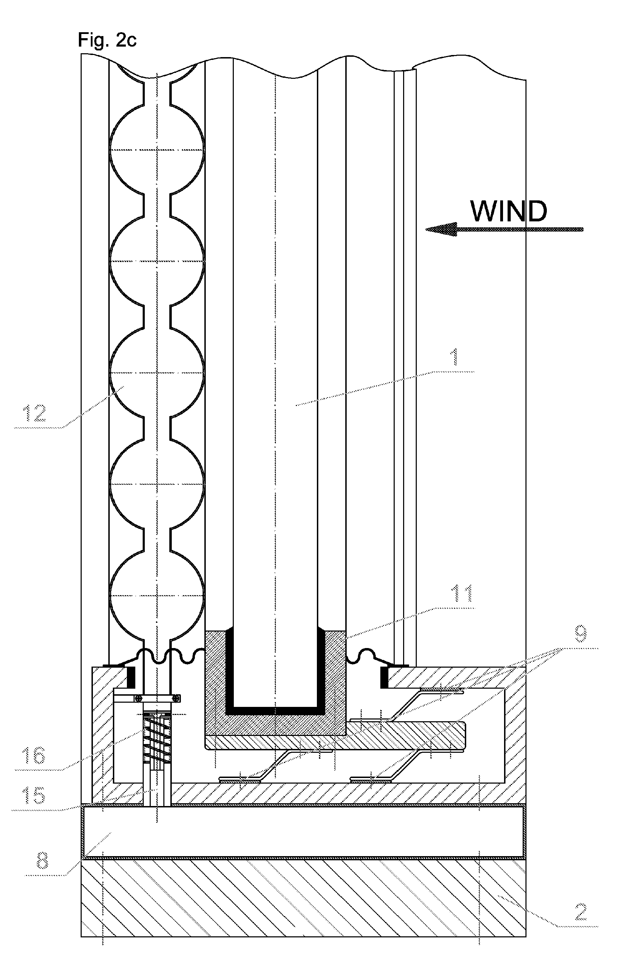

The exemplary embodiment of the invention is illustrated on figures 1, 2a, 2b and 2c.

A standard façade structure consisting of vertical pillars resting on construction roofs, and standard filling glazing panels is shown on fig. 1. The building of the structure consists in mounting standard panels in system orthogonal frames comprising the following components:
a. Vertical system beams
   The vertical system beams are the aluminum pressed profiles shown on fig. 2a, mounted to the vertical structure pillars 2 enabling slide sealing between the movable vertical panel edge and its inner surface 9 and allowing for the compressed air flow in the channels shaped in the beam cross-section, leading the compressed air along the pillars to a collector on a technical floor. Additionally, on fig.2a the side panel edge 1 and the panel framing slab 11 may be seen.
b. Horizontal system beams
   The horizontal system beams are the pressed aluminum profiles shown on fig. 2b, assuring insulation of the movable bottom panel edge of the higher floor 11, providing a shelter for the axial hinge of the upper panel edge of the lower floor 13, and comprising a spring relaxation gear with the panel dislocation bumper10, connected to the vertical beams by a special knot connector. Additionally, the following parts are shown on fig.2b: side edge of the movable glazing panel 1, a panel framing slab 11, a system seal the cross-section of which contains air tubes 12 and the axial hinges of the lower and upper floor panel 13-14.
c. System knot connectors.
   The system knot connectors are the cubic moulds shown on fig, 2c, mounted on the structure pillars 2, dimensioned to fit the system beams and assuring hermetic connection 8, of the compressed air channels of the vertical system beams of the neighboring floors as well as providing support for the horizontal beam and the axial hinge of the lower floor movable panel. Moreover, the system connector comprises an embedded socket 15 for a piston pump 16 driven by the pressure generated by the panel movements, imposing force on the system seal 12 comprising the air-bags. The piston pump 16 transmits the pressure to the compressed air tube channels in the vertical system beams through the joint 8. The movable panel sealing glides 9 are also shown on fig. 2c.
   A standard filling, eg. window panel is suspended in such a system frame , for instance on a suspension slat mounted to system knot connector. The suspension mounting of the movable panel by its upper edge allows to avoid the loads being carried by its side and bottom edges. Consequently, the panel may be framed by a narrow protecting slat 4.
   Supplementary components used in connection with the inventive method are the following:
   - Resilient sealing band glides, mounted to the movable panel framing and assuring its sealing in the system vertical beams 1, fig 2a and the horizontal beams 1 fig 2b.
   - A piston pump 16 mounted in the system knot connector
   - A system seal with tube air channels, receiving the moving panel force and driving the pump piston.

On fig. 2c the interaction of the movable panel 1, the system seal comprising air tubes 12, and the piston pump 16 are shown. The system rubber seal includes an axial tube channel with small, as compared to the cylindrical air bags, cross-section area, which results in nonlinear pressure increase in the air bags during radial panel movement from the cylinder surface towards the axis. It is advantageous because of the mentioned above necessity to adapt the converter damping to a wide range of wind velocities in a specific area.

The vertical beams extending along the bearing pillars of the structure, interconnected by the system knot connectors on the technical floor by the horizontal compressed air channel. After a pre-determined pressure limit has been reached, an outlet valve is opened and micro-turbine/generator is activated.. Its operation continues until the pressure drop reaches a pre-determined level, e.g. 10%. The synchronic turbogenerator is able to operate stably in the above described conditions.

### Expected efficiency of the system using the method and the active element according to the invention.

Total efficiency of the energy conversion using the method and the active element according to the invention is represented by the product the following factors:
a. The efficiency of the wind energy conversion by the movable panel.
   The energy losses result from the friction of the movable parts, like the axial hinge, the seals, the pump piston and from the heat dispersion within the panel internal structure, the decrease of which is the function of the panel rigidity increase. For typical window panels this component may be neglected, the remaining components causing 10-20% of the losses for the velocity range concerned, so that the total efficiency of this component is >0,8 in the case of a properly constructed device.
b. The efficiency of the pneumatic accumulation system. The pressure drops caused by the flow resistance may be neglected considering the low linear air velocity range concerned, which is a critical parameter in the case of the flow resistance calculated according to the Bernoulli equation.
c. The efficiency of the electric energy production means, preferably a turbogenerator set.
   Assuming 0,7 aerodynamic efficiency reached by most modern turbines, the total efficiency of this component, considering the stream factor, is approx. 0,4, which assuming 15% electric losses would add up to a total loss of approx 0,3.

The resulting total efficiency of the system as described above with reference to the assumed exemplary parameters would be about 0.25, which enables producing of 1,5W per m² of the façade, assuming the 2m/s wind, which is respectively 0,75W for the assumed above orthogonal velocity pattern with 2m/s amplitude and 4s period.

## Claims

1. Method of obtaining electric energy out of the elements of a construction, the construction having a form of a frame comprising at least one rigid outer element, in which said at least one outer element is mounted on the frame in a way enabling its limited movements resulting from the wind action on the said element, wherein the kinetic energy of said element is being accumulated and then converted into electric energy.

2. The method according claim 1, wherein the kinetic energy of said element is being accumulated by a spring latch drive means.

3. The method according claim 1, wherein the kinetic energy of said element is being accumulated by generating overpressure in a pneumatic system.

4. The method according claim 1, wherein the kinetic energy of said element is being accumulated by generating overpressure in a hydraulic system.

5. The method according claims 1-4 wherein the increase of the reaction force of the energy accumulation system in response to the pressure of said active element, is a function of its inclination from the balance point determined in lack of wind conditions, which is ensured by application of a closed elastic container with a constant gas content (air bag) having such a shape that the increase of the inclination of the active element from the balance point results in the increase of its contact surface with the air bag and in consequence the increase of the air bag pressure per linear movement of the active element and the increased reaction force which is directed opposite to the direction of the movement of the active element.

6. Active outer element of a construction having a form of a frame, the element being mounted on the frame in a way enabling its limited movements resulting from the wind action on the said element, wherein said active element is coupled to an accumulation system for accumulating the kinetic energy of the movements of said active element, said accumulation system being coupled with electric energy production means in a way enabling generation of electric energy.

7. The element according the claim 5, having a form of a glazing curtain panel.

8. The element according the claim 5, having a form of a decoration curtain panel.

9. The element according the claim 5, having a form of an advertising curtain panel.

10. The element according any of the claims 7-9, **characterized in that** it is coupled to kinetic energy accumulation means in a form of a spring latch drive means.

11. The element, according any of the claims 7-9, **characterized in that** it is coupled to kinetic energy accumulation means in a form of a pneumatic system.

12. The element, according any of the claims 7-9, **characterized in that** it is coupled to kinetic energy accumulation means in a form of a hydraulic system.

13. Construction having a form of a frame supported by a bearing structure, **characterized in that** at least one active outer element according to any of the claims 6-12 is mounted thereon.

14. The construction according claim 13, wherein the seal of said active element consists of a slat provided with resilient clamps, preferably gliding on the inner surfaces of the frame which is fastened to the construction façade.

15. The construction according claim 13, wherein the frame comprises at least one beam made of a prefabricated profile, the profile comprising a closed channel enabling pumping of the compressed air along the beams assembled from such profiles.
